# DEMANDE DE BREVET EUROPEEN

(11) **EP 4 054 060 A1**
(43) Date de publication de la demande: **07.09.2022**
(21) Numéro de dépôt: 22159734.7
(22) Date de dépôt: 02.03.2022
(51) Int. Cl.: H02K 7/106, H02K 49/00, H02K 5/02

(54) **RALENTISSEUR ELECTROMAGNETIQUE ET ENSEMBLE COMPRENANTUN TEL RALENTISSEUR**

(30) Priorité: 02.03.2021 FR 2102004
(71) Demandeur: Telma, 95310 Saint-Ouen L'Aumône (FR)
(72) Inventeur: MBAREK, Akafou, 78130 LES MUREAUX (FR); BELANCE, Romuald, 95170 DEUIL LA BARRE (FR); QUENNET, Nicolas, 95240 CORMEILLES EN PARISIS (FR)
(74) Mandataire: Plasseraud IP

(57) **Abrégé**

L'invention concerne un ensemble comprenant un dispositif d'entrainement en rotation d'un arbre de transmission, et un ralentisseur électromagnétique (6) propre à freiner la rotation de l'arbre de transmission, le dispositif d'entrainement comportant un carter (8) et un arbre de transmission(10) s'étendant selon une direction axiale (X), ledit ralentisseur électromagnétique comportant un support de stator (18) fixé au carter, caractérisé en ce que le support de stator (18) comporte au moins un relief (22) s'étendant selon la direction axiale (X), et en ce que le carter (8) comporte au moins un relief complémentaire (24) coopérant avec au moins une partie du relief (22) du support de stator pour fixer la position du support de stator par rapport au carter selon au moins une direction contenue dans un plan perpendiculaire à la direction axiale (X).

## Description

### Domaine technique de l'invention

La présente invention concerne le domaine des ralentisseurs électromagnétiques.

### Etat de la technique antérieure

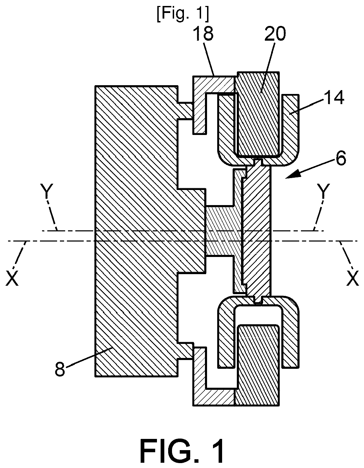

En référence à la figure 1, la fixation d'un ralentisseur électromagnétique 6 sur un carter 8 d'un dispositif d'entrainement est réalisé par visserie. Or, il existe un jeu entre les trous formés sur le carter 8 et les trous formés sur le support de stator 18. Ce jeu peut avoir pour conséquence un désaxage de un à trois millimètres entre l'axe Y-Y du support de stator et l'axe X-X de l'arbre de transmission. Comme la distance entre le rotor 14 et le stator 20 est très faible pour garantir une efficacité de freinage, ce désaxage peut engendrer une dégradation irréversible du ralentisseur électromagnétique.

### Présentation de l'invention

Un premier but de la présente invention est de fixer la position du stator par rapport au rotor avec une grande précision.

Cette fixation devrait avantageusement être facile à réaliser et peu onéreuse.

### Résumé de l'invention

La présente invention a pour objet un ensemble comprenant un dispositif d'entrainement en rotation d'un arbre de transmission, et un ralentisseur électromagnétique propre à freiner la rotation de l'arbre de transmission, le dispositif d'entrainement comportant un carter et un arbre de transmission propre à pivoter autour d'un axe de rotation s'étendant selon une direction axiale, ledit ralentisseur électromagnétique comportant un rotor fixé à l'arbre de transmission, un support de stator fixé au carter et un stator solidaire du support de stator, caractérisé en ce que le support de stator comporte au moins un relief s'étendant selon la direction axiale, et en ce que le carter comporte au moins un relief complémentaire coopérant avec au moins une partie du relief du support de stator pour fixer la position du support de stator par rapport au carter selon au moins une direction contenue dans un plan perpendiculaire à la direction axiale.

Le dispositif d'entrainement est au moins un dispositif parmi une boite de vitesse et un pont moteur.

Les caractéristiques exposées dans les paragraphes suivants peuvent, optionnellement, être mises en œuvre. Elles peuvent être mises en œuvre indépendamment les unes des autres ou en combinaison les unes avec les autres. Le relief comporte un anneau ayant pour centre un point de l'axe de rotation. Avantageusement, cet unique relief est facile à fabriquer. Il permet de fixer la position du support de stator par rapport au carter selon deux directions contenues dans un plan perpendiculaire à l'axe de rotation.

Le support de stator comporte au moins trois reliefs situés autour d'un point de l'axe de rotation à environ 120°l'un par rapport à l'autre.

Avantageusement, lesdits reliefs empêchent toute translation du support de stator selon les directions Y et Z par rapport au carter, les directions Y et Z étant perpendiculaires entre elles et perpendiculaires à l'axe de rotation.

Le carter comporte au moins trois reliefs complémentaires situés autour d'un point de l'axe de rotation à environ 120°l'un par rapport à l'autre.

Avantageusement, les reliefs empêchent toute translation du support de stator selon les directions Y et Z par rapport au carter, les directions Y et Z étant perpendiculaires entre elles et perpendiculaires à l'axe de rotation.

En variante, le carter comporte un unique relief complémentaire en forme d'anneau. Le carter comporte au moins un plot pourvu d'un orifice de fixation configuré pour fixer le support de stator au carter, ledit relief complémentaire étant une saillie s'étendant dans le prolongement d'une face cylindrique du au moins un plot. L'anneau comporte au moins un orifice de fixation ayant un centre, la distance entre le centre dudit au moins un orifice de fixation et le bord de l'anneau étant inférieure au diamètre d'un plot.

Chaque saillie comporte une face cylindrique creuse propre à être en appui contre une face latérale de l'anneau.

La distance entre le centre de l'orifice de fixation du carter et la face cylindrique creuse est comprise entre 12 et 25 millimètres.

Le support de stator comporte en outre une surface périphérique entourant l'anneau, et dans lequel l'anneau comporte une surface d'appui plane sur laquelle une partie du carter est en appui, la surface périphérique étant parallèle à la surface d'appui, la surface périphérique étant décalée selon la direction axiale par rapport à la surface d'appui d'une distance comprise entre 1 et 10 millimètres.

La divulgation concerne également un ralentisseur électromagnétique propre à freiner la rotation d'un l'arbre de transmission d'un dispositif d'entrainement, l'arbre de transmission étant propre à pivoter autour d'un axe de rotation s'étendant selon une direction axiale, ledit ralentisseur électromagnétique comportant un rotor destiné à être fixé à l'arbre de transmission, un support de stator destiné à être fixé au carter et un stator solidaire du support de stator, caractérisé en ce que le support de stator comporte au moins un relief s'étendant selon la direction axiale, ledit relief étant propre à coopérer avec au moins un relief complémentaire du carter pour fixer la position du support de stator par rapport au carter selon au moins une direction contenue dans un plan perpendiculaire à la direction axiale.

### Brève description des figures

[Fig. 1] est une vue schématique en coupe d'un ensemble ralentisseur électromagnétique- dispositif d'entrainement selon l'art antérieur ;
[Fig. 2] est une vue en perspective d'un ralentisseur électromagnétique et d'une partie d'un dispositif d'entrainement d'un ensemble selon la présente invention ;
[Fig. 3] est une vue en coupe axiale d'une partie du dispositif d'entrainement, d'une partie du rotor et du support de stator de l'ensemble représenté sur la figure 2 ;
[Fig. 4] est une vue en perspective d'un support de stator de l'ensemble représenté sur la figure 2 ;
[Fig. 5] est une vue d'une face d'un carter de l'ensemble représenté sur la figure 2, le ralentisseur électromagnétique étant fixé sur cette face ; et
[Fig. 6] est une vue en perspective d'une partie de la face du carter illustré sur la figure 5.

### Description détaillée de l'invention

L'ensemble 2 selon la présente divulgation est destiné à être monté dans un véhicule, par exemple un bus ou un poids lourd. En référence à la figure 1, l'ensemble 2 comporte un dispositif d'entrainement 4 et un ralentisseur électromagnétique 6.

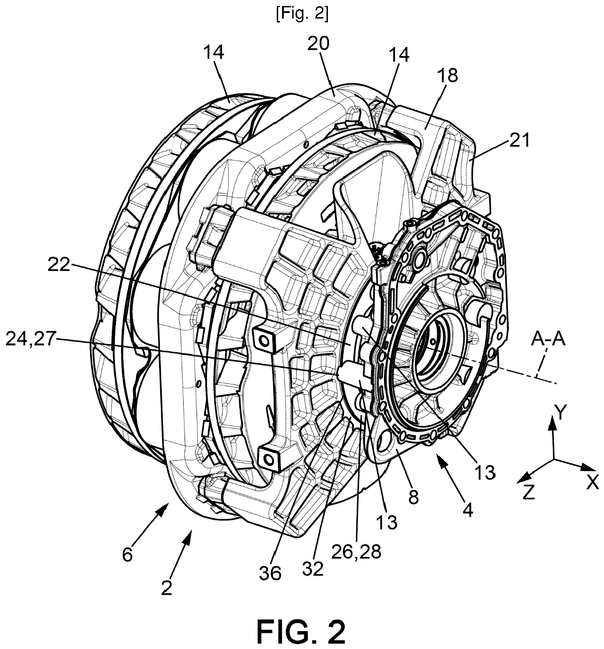

Le dispositif d'entrainement 4 est par exemple constitué par une boite de vitesse ou un pont moteur. En référence à la figure 2, le dispositif d'entrainement 4 comporte un carter 8 représenté en partie sur les figures, un moteur contenu dans la carter, un arbre de transmission 10 entrainé en rotation par le moteur et une bride de sortie 12 fixée à une extrémité de l'arbre de transmission. L'arbre de transmission 10 est entrainé en rotation autour d'un axe de rotation A-A s'étendant selon une direction axiale X. Le carter 8 comprend un passage 11 traversé par l'arbre de transmission 10.

Pour fixer le support de stator 18 au carter, le carter comporte des plots 13 s'étendant selon une direction axiale X. Les plots 13 sont disposés autour du passage 11. Les plots 13 sont pourvus d'orifices de fixation 15 taraudés.

Le ralentisseur électromagnétique 6 est propre à freiner la rotation de l'arbre de transmission10. A cet effet, le ralentisseur électromagnétique 6 comporte un rotor 14 fixé à la bride de sortie 12, un support de stator 18, des vis 19 de fixation du support de stator au carter 8 et un stator 20 solidaire du support de stator 18.

Le support de stator 18 comporte une flasque 21 pourvue d'un trou central traversé par l'arbre de transmission 10. Ce flasque 21 est muni d'orifices de fixation 30, 31 traversants. Les vis 19 sont montées dans les orifices de fixation 30, 31 du support de stator et dans les orifices de fixation 15 du carter pour fixer le support de stator au carter.

Le support de stator 18 comporte en outre un relief 22 propre à coopérer avec au moins une partie d'un relief complémentaire 24 du carter. Le relief 22 et le relief complémentaire 24 s'étendent selon la direction axiale X.

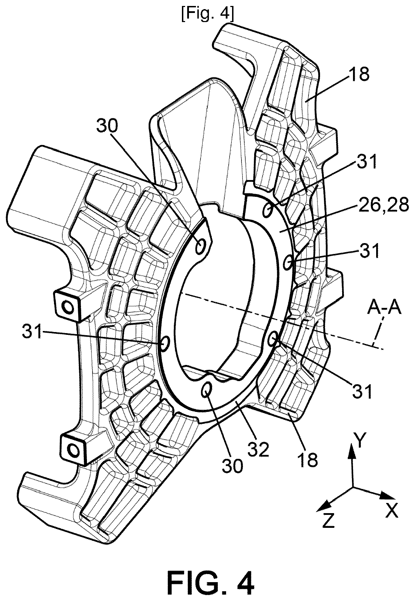

Dans le mode de réalisation représenté sur les figures, le relief 22 comporte un anneau 26 ayant pour centre un point de l'axe de rotation A-A et le relief complémentaire 24 comporte au moins trois saillies 27, illustrés sur les figures 4 à 6. La coopération entre l'anneau 26 et les saillies 27 permet de fixer la position du support de stator 18 par rapport au carter 8 selon deux directions Y et Z contenues dans un plan perpendiculaire à l'axe de rotation A-A.

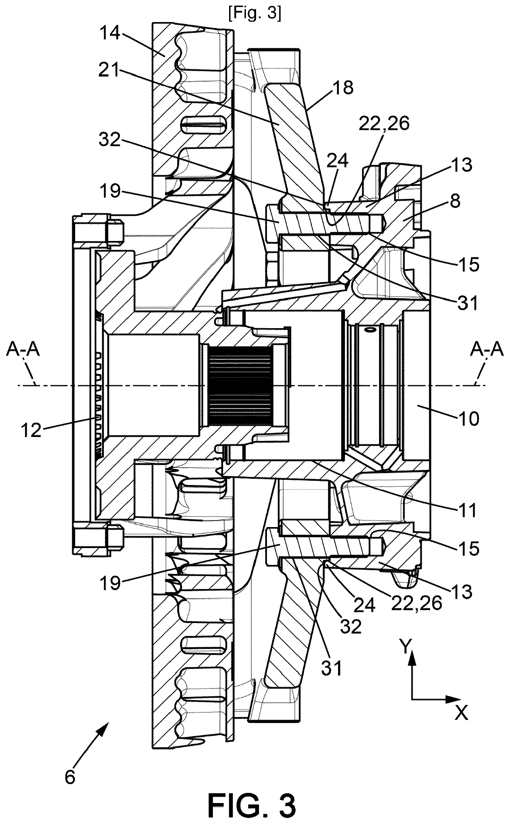

Le support de stator 18 comporte en outre une surface périphérique 32 entourant l'anneau 26. Cette surface périphérique 32 forme un espace de réception pour les saillies 27, comme visible sur les figures 2 et 3. Dans le mode de réalisation représenté, la surface périphérique 32 est plane.

La face de l'anneau qui s'étend dans un plan perpendiculaire à l'axe de rotation A-A forme une surface d'appui 28 sur laquelle une partie de la face d'extrémité des plots 13 du carter est en appui. La surface périphérique 32 est parallèle à la surface d'appui 28. La surface périphérique 32 est décalée selon la direction axiale X par rapport à la surface d'appui d'une distance comprise entre 1 et 10 millimètres. Cette distance correspond à la hauteur de la saillie et à un jeu.

Les orifices de fixation 30, 31 sont aménagés sur la surface d'appui 28. Dans le mode de réalisation représenté, quatre orifices de fixation 31 sont situés à proximité du bord extérieur de l'anneau 26. Pour ces quatre orifices de fixation référencés 31, la distance entre le centre d'un orifice de fixation 31 et le bord de l'anneau 26 est inférieure au diamètre d'un plot 13. Pour les orifices de fixation référencés 30, cette distance est quelconque.

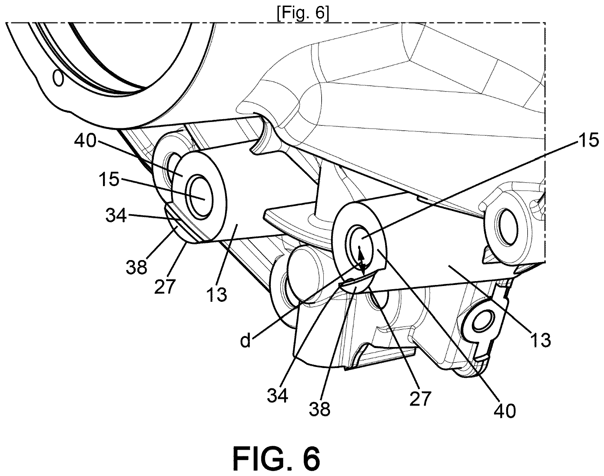

En référence à la figure 6, les saillies 27 sont avantageusement agencées dans le prolongement d'une face circulaire de certains plots 13. La face circulaire prolongée par une saillie est située à l'opposé du passage 11. Avantageusement, les saillies 27 sont réalisés par enlèvement de matière par exemple par usinage.

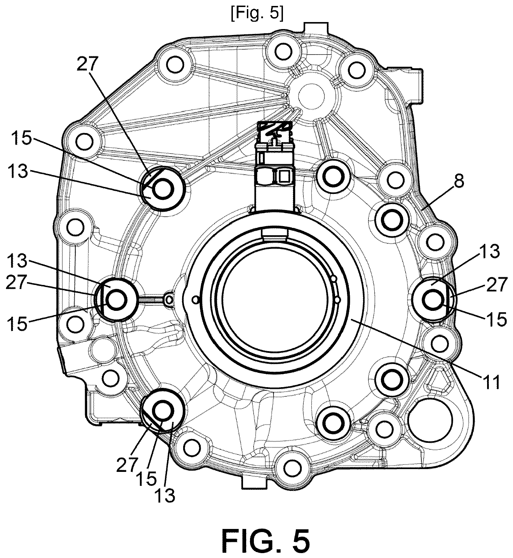

Dans le mode de réalisation, quatre plots 13 du support de stator 18 sont munis de saillies 27, comme visible sur la figure 5. Trois de ces plots sont situés autour d'un point de l'axe de rotation A-A à environ 120°l'un par rapport à l'autre. Cet agencement bloque toute translation du support de stator 18 selon une direction quelconque contenu dans un plan perpendiculaire à l'axe de rotation A-A. Le quatrième plot 13 munis d'une saillie peut être disposé dans une position quelconque. Pour obtenir une fixation exacte du support de stator par rapport au carter, seuls les trois saillies 27 sont nécessaires.

Chaque saillie 27 comporte une face cylindrique creuse 34 propre à être en appui contre une face latérale 36 de l'anneau. La face cylindrique creuse 34 est concave du côté de l'orifice de fixation 15.

En référence à la figure 6, la distance d entre le centre de l'orifice de fixation 15 des plots du carter et la face cylindrique creuse 34 de la saillie, est avantageusement comprise entre 12 et 25 millimètres. Ainsi, la face cylindrique creuse 34 des saillies est en appui contre une face latérale 36 de l'anneau. La face d'extrémité 40 du plot qui ne comprend pas la saille est en appui sur la surface d'appui 28 de l'anneau 26. Cette coopération augmente la précision et la stabilité du montage.

En variante, l'anneau 26 entoure la surface périphérique 32.

En variante, les vis 19 sont remplacés par des goujons.

En variante, l'anneau 26 du support de stator est remplacé par au moins trois reliefs 24 situés autour d'un point de l'axe de rotation A-A à environ 120°l'un par rapport à l'autre. Ces reliefs empêchent toute translation du support de stator selon les directions Y et Z par rapport au carter.

En variante, l'anneau 26 du support de stator est remplacé par deux reliefs 22 situés autour d'un point de l'axe de rotation A-A à environ 120°l'un par rapport à l'autre. Ces reliefs 22 empêchent toute translation du support de stator selon les directions Y et Z par rapport au carter.

Selon une variante moins avantageuse, l'anneau 26 du support de stator est remplacé par un relief 22 qui bloque le mouvement du stator selon une direction.

En variante, seuls trois plots 13 comportent des saillies 27, les plots pourvus de saillies étant situés autour d'un point de l'axe de rotation A-A à environ 120° l'un par rapport à l'autre. Ces trois reliefs sont suffisants pour bloquer toute translation du support de stator selon les directions Y et Z par rapport au carter.

Selon une variante moins avantageuse, seul deux plots 13 comportent des saillies 27, les plots pourvus de saillies étant situés autour d'un point de l'axe de rotation A-A à environ 120°l'un par rapport à l'autre.

En variante, le carter comporte un unique relief complémentaire en forme d'anneau à la place des saillies 27 et des plots 13.

En variante, les faces cylindriques creuses 34 des saillies 27 sont replacée par des une face plane ayant une normale passant par l'axe de rotation A-A.

## Revendications

1. Ensemble (2) comprenant un dispositif d'entrainement (4) en rotation d'un arbre de transmission, et un ralentisseur électromagnétique (6) propre à freiner la rotation de l'arbre de transmission, le dispositif d'entrainement (4) comportant un carter (8) et un arbre de transmission(10) propre à pivoter autour d'un axe de rotation (A-A) s'étendant selon une direction axiale (X), ledit ralentisseur électromagnétique (6) comportant un rotor (14) fixé à l'arbre de transmission (10), un support de stator (18) fixé au carter et un stator (20) solidaire du support de stator, **caractérisé en ce que** le support de stator (18) comporte au moins un relief (22) s'étendant selon la direction axiale (X), et **en ce que** le carter (8) comporte au moins un plot (13) pourvu d'un orifice de fixation (15) configuré pour fixer le support de stator (18) au carter (8) et au moins un relief complémentaire (24) coopérant avec au moins une partie du relief (22) du support de stator pour fixer la position du support de stator (18) par rapport au carter (8) selon au moins une direction contenue dans un plan perpendiculaire à la direction axiale (X), ledit relief complémentaire (24) étant une saillie (27) s'étendant dans le prolongement d'une face cylindrique du au moins un plot.

2. Ensemble (2) selon la revendication 1, dans lequel le relief (22) comporte un anneau (26) ayant pour centre un point de l'axe de rotation (A-A).

3. Ensemble (2) selon la revendication 1, dans lequel le support de stator (18) comporte trois reliefs (24) situés autour d'un point de l'axe de rotation (A-A) à environ 120°l'un par rapport à l'autre.

4. Ensemble (2) selon l'une quelconque des revendications 1 à 3, dans lequel le carter (8) comporte trois reliefs complémentaires (24) situés autour d'un point de l'axe de rotation (A-A) à environ 120°l'un par rapport à l'autre.

5. Ensemble (2) selon la revendication 2, dans lequel l'anneau (26) comporte au moins un orifice de fixation (31) ayant un centre, la distance (d) entre le centre dudit au moins un orifice de fixation (31) et le bord de l'anneau (26) étant inférieure au diamètre d'un plot (13).

6. Ensemble (2) selon la revendication 2, dans lequel chaque saillie (27) comporte une face cylindrique creuse (34) propre à être en appui contre une face latérale (36) de l'anneau (26).

7. Ensemble (2) selon la revendication 6, dans lequel la distance entre le centre de l'orifice de fixation (15) du carter et la face cylindrique creuse (34) est comprise entre 12 et 25 millimètres.

8. Ensemble (2) selon l'une quelconque des revendications 2, 4 à 6, dans lequel le support de stator (18) comporte en outre une surface périphérique (32) entourant l'anneau (26), et dans lequel l'anneau (26) comporte une surface d'appui (28) plane sur laquelle une partie du carter est en appui, la surface périphérique (32) étant parallèle à la surface d'appui (28), la surface périphérique étant décalée selon la direction axiale (X) par rapport à la surface d'appui d'une distance comprise entre 1 et 10 millimètres.

9. Ensemble (2) selon l'une quelconque des revendications 1 à 8, dans lequel le carter (8) comporte au moins deux plots (13) comportant des saillies (27), les plots (13) pourvus de saillies étant situés autour d'un point de l'axe de rotation A-A à environ 120°l'un par rapport à l'autre.

10. Ralentisseur électromagnétique (6) propre à freiner la rotation d'un l'arbre de transmission d'un dispositif d'entrainement (4), l'arbre de transmission (10) étant propre à pivoter autour d'un axe de rotation (A-A) s'étendant selon une direction axiale (X), ledit ralentisseur électromagnétique (6) comportant un rotor (14) destiné à être fixé à l'arbre de transmission (10), un support de stator (18) destiné à être fixé au carter et un stator (20) solidaire du support de stator, **caractérisé en ce que** le support de stator (18) comporte au moins un relief (22) s'étendant selon la direction axiale (X), ledit relief (22) étant propre à coopérer avec au moins un relief complémentaire (24) du carter pour fixer la position du support de stator (18) par rapport au carter (8) selon au moins une direction contenue dans un plan perpendiculaire à la direction axiale (X).
